# EUROPÄISCHE PATENTSCHRIFT

(11) **EP 2 205 941 B1**
(45) Veröffentlichungstag und Bekanntmachung des Hinweises auf die Patenterteilung: **15.06.2011**
(21) Anmeldenummer: 08843315.6
(22) Anmeldetag: 17.10.2008
(51) Int. Cl.: G01C 15/00, G02B 27/64

(54) **MARKIER- UND/ODER NIVELLIERVORRICHTUNG**
MARKING AND/OR LEVELING DEVICE
DISPOSITIF DE MARQUAGE ET/OU DE NIVELAGE

(30) Priorität: 22.10.2007 DE 102007050292
(43) Veröffentlichungstag der Anmeldung: 14.07.2010
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2008/064038
(87) Internationale Veröffentlichungsnummer: WO 2009/053314

(56) Entgegenhaltungen:
- EP-A- 0 341 812
- WO-A-99/54681
- DE-U1- 29 716 316
- US-A- 5 459 932
- US-A1- 2006 080 849

## Beschreibung

### Stand der Technik

Die Erfindung betrifft eine Markier- und/oder Nivelliervorrichtung gemäß dem Oberbegriff des Anspruchs 1.

Es sind Markier- und/oder Nivelliervorrichtungen mit unterschiedlich ausgebildeten Pendelsystemen zum vertikalen oder horizontalen Ausrichten einer Lichtquelle bekannt. Bei einer ersten bekannten Ausführungsform ist das die Lichtquelle tragende Pendel als Faden oder Schnur ausgebildet. Nachteilig bei diesem Pendelsystem ist es, dass es gegen Erschütterungen äußerst empfindlich und schwierig zu stabilisieren bzw. einzupendeln ist. Bei einer zweiten bekannten Ausführungsform eines Pendelsystems umfasst dieses ein starres Pendel, das auf einer Schneide oder einer Spitze gelagert ist. Nachteilig ist die Empfindlichkeit dieses Pendelsystems gegenüber Stößen. Bei einer dritten bekannten Ausführungsform umfasst das Pendelsystem ein starres Pendel, das kreuzgelenkartig (Kaderngelenk) gelagert ist. Nachteilig bei diesem an sich robusten Pendelsystem ist die aufwendige und kostenintensive Herstellung des Kreuzgelenks, welches extrem reibungsarm arbeiten muss.

Nachteilig bei sämtlichen bekannten Pendellasersystemen ist zudem, dass diese vergleichsweise hoch bauen und in der Regel eine separate Pendeldämpfung benötigen, um einen sehr langen Einpendelvorgang zu vermeiden.

Aus der DE 297 16 316 U1 ist eine Vorrichtung zum Nivellierren und/oder Anbringen von Markierungen an Wänden bekannt. Die Vorrichtung der DE 297 16 316 U1 weist dabei eine Lichtquelle auf, die an einem relativ zu einem Gehäuse verschwenkbaren Pendel angeordnet ist, wobei Mittel zur Dämpfung der Pendelschwungung des Pendels vorgesehen sind.

Aus der EP 0 341 812 A1 ist ein Laserlot mit zwei senkrecht zueinander stehenden Laserlinien bekannt, deren Orientierung relativ zu einem Gehäuse der Vorrichtung ausgerichtet werden kann.

Aus der US 5,459,932 ist ein automatisches Laserlot- und Nivelliergerät mit einer an einem Pendel angeordneten Laservorrichtung bekannt. Über eine Strahlungsteileroptik wird das Signal einer Laserdiode in zwei senkrecht zueinander angeordnete Teilstrahlen zerlegt. Darüber hinaus weist die Vorrichtung der US 5,459,932 optisch Korrekturmittel zur Beinflussung der Richtung der Laserstrahlen auf.

### Offenbarung der Erfindung

### Technische Aufgabe

Der Erfindung liegt die Aufgabe zu grunde, eine Markier- und/oder Nivelliervorrichtung mit einem alternativ ausgestalteten Pendelsystem vorzuschlagen, das zum einen niedrig bauend realisierbar ist und bei dem zum anderen der Einpendelzeitraum möglichst kurz ist.

### Technische Lösung

Diese Aufgabe wird mit einer Markier- und/oder Nivelliervorrichtung mit den Merkmalen des Anspruchs 1 gelöst. Vorteilhafte Weiterbildungen der Erfindung sind in den abhängigen Ansprüchen angegeben.

Der Erfindung liegt der Gedanke zugrunde, dem die, insbesondere als Laserlichtquelle ausgebildete, Lichtquelle tragenden Pendel, mittels dem die Lichtquelle relativ zu dem Gehäuse der Markier- und/oder Nivelliervorrichtung in mindestens einer, vorzugsweise in sämtlichen, Raumrichtungen verschwenkbar und damit lotrecht ausrichtbar ist, Mittel zum pulsartigen Beschleunigen bzw. Bewegen zuzuordnen. Zusätzlich oder alternativ liegt es im Rahmen der Erfindung derartige Mittel zum pulsartigen Beschleunigen einer Lagerung des Pendels zuzuordnen. Durch die pulsartige Beschleunigung des Pendels und/oder der Pendellagerung kann das Pendel sehr schnell in eine vertikal ausgerichtete Position verschwenken. Das Vorsehen von Mitteln zum pulsartigen Beschleunigen des Pendels und/oder der Pendellagerung ermöglichen/ermöglicht es zudem, das, vorzugsweise starre, Pendel vergleichsweise kurz auszubilden und trotzdem eine exakte, lotrechte Ausrichtbarkeit des Pendels zu gewährleisten. Besonders bevorzugt ist eine Ausführungsform, bei der ein starres, mindestens eine Lichtquelle tragendes Pendel, vorzugsweise ein Endabschnitt dieses Pendels, in einer Pendelaufnahme (Pendellager) gelagert ist, wobei die Pendelaufnahme reibschlüssig an dem Pendel anliegt. Durch eine pulsartige Beschleunigung des Pendels und/oder durch eine pulsartige Beschleunigung der Pendelaufnahme wird das Pendel relativ zu der Pendelaufnahme pulsartig bewegt und richtet sich dabei vertikal aus, bis es sich in seiner Schwerpunktlage befindet. Ein weiterer Vorteil einer nach dem Konzept der Erfindung ausgebildeten Markier- und/oder Nivelliervorrichtung ist neben einer niedrigen Bauhöhe und einer schnellen Pendeldämpfung der einfache und robuste Aufbau, der eine lange Lebensdauer der Markier- und/oder Nivelliervorrichtung garantiert.

In einer überraschend einfachen Ausführungsform der Mittel zum pulsartigen Beschleunigen, umfassen die Mittel eine Rütteleinrichtung mit einem von einem Elektromotor antreibbaren Exzenter. Anders ausgedrückt umfassen die Mittel zum pulsartigen Beschleunigen des Pendels und/oder der Pendellagerung einen (kleinen) Motor, der eine Unwucht trägt. Diese Unwucht sorgt aufgrund ihrer Massenträgheit dafür, dass das Pendel und/oder die Pendellagerung vibriert. Alternativ dazu ist es denkbar das Pendel und/oder die Pendellagerung pulsartig mit Hilfe von, insbesondere tieffrequenten, Schallwellen zur Vibration anzuregen.

Gemäß einer weiteren alternativen Ausführungsform umfassen die Mittel zum pulsartigen Beschleunigen des Pendels und/oder der Pendellagerung mindestens eine Luftstrahleinrichtung mit deren Hilfe gepulste Luftströme erzeugbar sind. Dabei ist eine Ausführungsform realisierbar, bei der ein auf das Pendel und/oder auf eine Pendellagerung gerichteter, gepulster Luftstrom erzeugt wird. Zusätzlich oder alternativ ist es denkbar, das Pendel mittels eines Luftspaltes veränderlicher Breite relativ zu dem Gehäuse der Markier- und/oder Nivelliervorrichtung zu lagern. Durch eine, insbesondere schnelle Änderung der Breitenerstreckung des Lagerspaltes, d.h. des Luftpolsters, insbesondere durch Variation des Luftdruckes und/oder des Volumenstroms wird das Pendel pulsartig beschleunigt und richtet sich somit vertikal aus.

Gemäß einer weiteren alternativen Ausführungsform umfassen die Mittel zum pulsartigen Beschleunigen des, insbesondere starren, Pendels und/oder der Pendellagerung eine Magneteinrichtung, mit der auf die Pendellagerung und/oder das Pendel wirkende, gepulste Magnetkräfte erzeugt werden können. Besonders bevorzugt ist eine Ausführungsform, bei der das Pendel relativ zum Gehäuse der Markier- und/oder Nivelliervorrichtung magnetisch gelagert ist, wobei die magnetische Lagerkraft pulsartig verändert und somit das Pendel zu Vibrationen angeregt werden kann.

Bevorzugt ist eine Ausführungsform, bei der dem Pendel eine Bremseinrichtung zugeordnet ist, mittels der das Pendel, insbesondere nach dem lotrechten Ausrichten mit Hilfe der Mittel zum pulsartigen Beschleunigen, vorzugsweise reibschlüssig, relativ zu dem Gehäuse fixierbar ist.

Im Hinblick auf die Ausgestaltung der Bremseinrichtung gibt es unterschiedliche Möglichkeiten. Gemäß einer ersten Alternative wirkt die Bremseinrichtung dauerhaft mit dem Pendel zusammen, derart, dass eine Relativbewegung zwischen dem Pendel und der Bremseinrichtung ausschließlich durch die pulsartige Beschleunigung des Pendels und/oder der Pendellagerung hervorgerufen wird, wobei die Bremseinrichtung in den Pulspausen bremsend auf das Pendel einwirkt. Besonders bevorzugt ist es dabei, wenn die Bremseinrichtung gleichzeitig eine, insbesondere die einzige, Lageraufnahme für das Pendel bildet.

Gemäß einer zweiten Alternative umfasst die Bremseinrichtung mindestens ein aktiv relativ zu dem Pendel zwischen einer Freigabestellung und einer Bremsstellung verstellbares (Brems-) Element. Dieses ist dabei in der Bremsstellung formschlüssig oder vorzugsweise reibschlüssig mit dem Pendel verbunden bzw. liegt an diesem an.

In Weiterbildung der Erfindung ist mit Vorteil vorgesehen, dass falls die Bremseinrichtung mit einem aktiv verstellbaren Element ausgestattet ist, das Element automatisch bei oder vor der Aktivierung der Mittel zur pulsartigen Beschleunigung des Pendels und/oder der Pendellagerung in die Freigabestellung verschwenkt wird. Alternativ ist eine manuelle Verstellung des Elementes zwischen der Freigabestellung und der Bremsstellung realisierbar.

Gemäß einer vorteilhaften Ausführungsform ist vorgesehen, dass das aktiv verstellbare Element der Bremseinrichtung reibschlüssig an dem Pendel, vorzugsweise einem Kugelkopf des Pendels anliegt. Für den Fall, dass das Element als nicht-verstellbares (passives) Bremselement ausgebildet ist, kann dieses die Lagerung für das Pendel bilden. Bevorzugt ist in diesem Fall eine ringförmige Ausbildung des Elementes, wobei der Ring an einem bevorzugt (teil-) kugelkopfförmigen Ende oder Abschnitt des Pendels anliegt und das Pendel durch in Vibration versetzen des Elementes bzw. des Pendels relativ zu dem Pendel verstellbar ist.

### Kurze Beschreibung der Figuren

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine schematische Darstellung einer Markier- und/oder Nivelliervorrichtung mit einer passiven Bremseinrichtung.
- Fig. 2:: die Markier- und/oder Nivelliervorrichtung gemäß Fig. 1 mit einer Bremseinrichtung mit einem aktiv verstellbaren Element.

### Ausführungsformen der Erfindung

In den Figuren sind gleiche Bauteile und Bauteile mit der gleichen Funktion mit den gleichen Bezugszeichen gekennzeichnet.

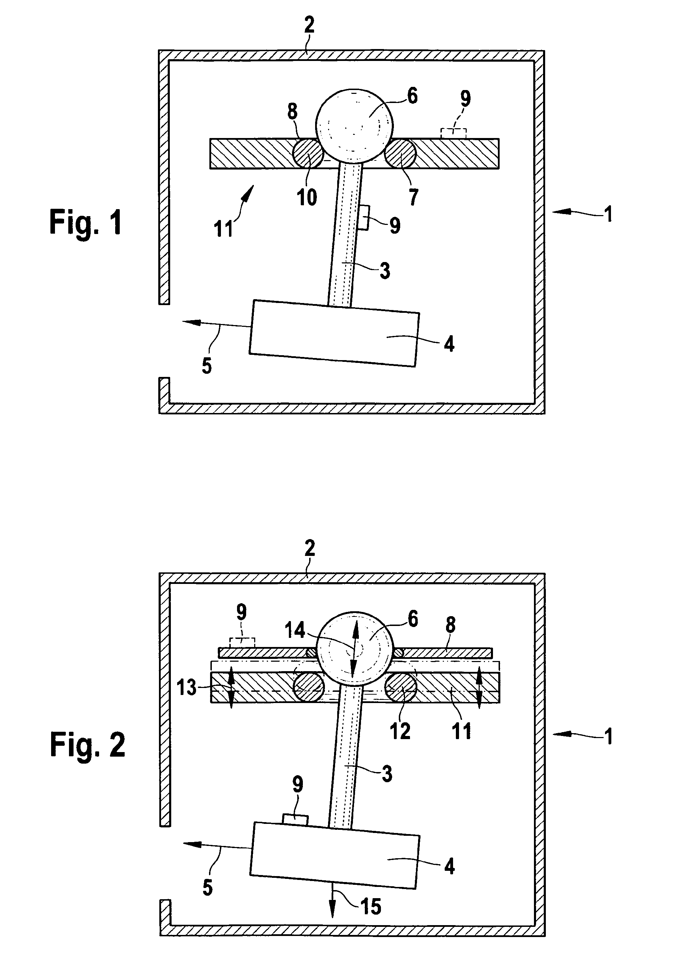

In Fig. 1 ist eine Markier- und/oder Nivelliervorrichtung 1 in einer schematischen Darstellung gezeigt. Diese umfasst ein Gehäuse 2 sowie ein relativ zu dem Gehäuse 2 in sämtlichen Raumrichtungen relativ zu dem Gehäuse 2 verschwenkbar gelagertes Pendel 3. Das Pendel 3 ist als starres Stangenelement ausgebildet und trägt an seinem in der Zeichnungsebene unteren Ende eine als Laserdiode ausgebildete Lichtquelle 4 zum Erzeugen eines im Querschnitt punkt- oder linienförmigen Laserstrahls 5, mit dem punkt- bzw. linienförmige, nivellierte Laserlinien auf eine Projektionsebene projizierbar sind.

An dem der Lichtquelle 4 gegenüberliegenden, in der Zeichnungsebene oberen Ende weist das starre Pendel 3 einen Kugelkopf 6 auf, der zusammen mit einer ringförmigen Lageraufnahme 7 ein Pendellager 8 bildet. Die Lageraufnahme 7 ist fest mit dem Gehäuse 2 verbunden und wird in der Zeichnungsebene nach unten von dem Pendel 3 durchsetzt. Anders ausgedrückt liegt der Kugelkopf 6 auf der Lageraufnahme 7 auf.

In Fig. 1 befindet sich das Pendel 3 in einer nicht ausgerichteten, von der Lotrechten abweichenden Position. Um das Pendel 3 lotrecht auszurichten sind lediglich schematisch dargestellte Mittel 9 zum pulsartigen Beschleunigen des Pendels 3 vorgesehen. In dem gezeigten Ausführungsbeispiel sind die Mittel 9 unmittelbar an dem Pendel 3 angeordnet. Zusätzlich oder alternativ ist eine Anordnung der Mittel 9 an der Lichtquelle 4 oder an der Lageraufnahme 7, d.h. an dem Pendellager 8 realisierbar (vergleiche strichliert eingezeichnete Mittel 9). Es ist auch denkbar, dass sämtliche vorgenannten Teile mit separaten Mitteln 9 zum pulsartigen Beschleunigen versehen sind. In einem einfachsten Fall sind die Mittel 9 zum pulsartigen Beschleunigen des Pendels 3 als Elektromotor mit Unwucht ausgebildet. Werden die Mittel 9 zum pulsartigen Beschleunigen des Pendels 3 aktiviert, wird dieses in Vibration versetzt und relativ zu der Lageraufnahme 7 und zu dem Gehäuse 2 pulsartig bewegt, wodurch das Pendel 3 mit Lichtquelle 4 seine Schwerpunktlage einnimmt, das Pendel 3 also derart ausgerichtet wird, dass die Lichtquelle 4 nivellierte Markierungen auf die Projektionsebene aufbringt.

Bei dem in Fig. 1 dargestellten Ausführungsbeispiel bildet die Lageraufnahme 7 des Pendellagers 8 gleichzeitig ein nicht verstellbares Element 10 einer (passiven) Bremseinrichtung 11. Durch die reibschlüssige Verbindung zwischen dem Kugelkopf 6 und dem Element 10 (Lageraufnahme 7) in den Pulspausen wird eine schnelle Abbremsung des Pendels 3 realisiert, so dass die Einpendelzeit zum lotrechten Ausrichten des Pendels 3 kurz ist.

Bei dem Ausführungsbeispiel gemäß Fig. 2 ist zusätzlich zu einem Pendellager 8 eine davon separate Bremseinrichtung 11 vorgesehen. Diese umfasst ein aktiv, manuell oder automatisch, relativ zu dem Kugelkopf 6 des Pendels 3 verstellbares (Brems-)Element 12, welches zwischen der gezeigten Freigabestellung und einer Bremsstellung, in der das Element 12 reibschlüssig an dem Kugelkopf 6 anliegt in den Pfeilrichtungen 13 verstellt werden kann. Durch Verstellen des verstellbaren Elementes 12 in die gezeigte Freigabestellung werden automatisch die Mittel 9 zum pulsartigen Beschleunigen des Pendels 3 aktiviert, so dass dieses in Vibration versetzt wird und sich relativ zu dem Gehäuse 2 im Pendellager 8 verdreht. Die Vibration des Pendels 3, die durch die Mittel 9 zum pulsartigen Beschleunigen hervorgerufen wird, ist durch die Pfeile 14 symbolisiert. Aufgrund der Vibrationsbewegung des Pendels 3 wird die Lagerreibung des Pendellagers 8 überwunden und die schwerkraftbedingte Rückstellkraft 15 reicht aus, das Pendel 3 lotrecht auszurichten, wodurch von der Lichtquelle 4 auf die nichtgezeigte Projektionsebene mittels des Lichtstrahls 5 eine horizontal ausgerichtete und/oder eine vertikal ausgerichtete Lichtmarkierung projiziert werden kann. Zusätzlich oder alternativ sind die Mittel 9 am Pendellager 8 anordenbar (vgl. strichliert gezeigte Mittel 9).

Die in den Fig. 1 und 2 gezeigten Markier- und/oder Nivelliervorrichtungen 1 sind gegenüber aus dem Stand der Technik bekannten Markier- und/oder Nivelliervorrichtungen äußerst robust ausgebildet. Zudem ist das Pendel 3 vergleichsweise kurz, wodurch die gesamte Markier- und/oder Nivelliervorrichtung 1 vergleichsweise niedrig baut.

## Patentansprüche

1. Markier- und/oder Nivelliervorrichtung umfassend eine Lichtquelle (4) die an einem relativ zu einem Gehäuse (2) verschwenkbaren Pendel (3) angeordnet ist,
**dadurch gekennzeichnet,**
**dass** Mittel (9) zum pulsartigen Beschleunigen des Pendels (3) und/oder eines Pendellagers (8) vorgesehen sind.

2. Vorrichtung nach Anspruch 1,
**dadurch gekennzeichnet,**
**dass** die Mittel (9) eine Rütteleinrichtung mit einem mittels eines Elektromotors antreibbaren Exzenter aufweisen.

3. Vorrichtung nach einem der vorhergehenden Ansprüche,
**dadurch gekennzeichnet,**
**dass** die Mittel (9) eine Luftstrahleinrichtung zum Erzeugen gepulster Luftströme aufweisen.

4. Vorrichtung nach einem der vorhergehenden Ansprüche,
**dadurch gekennzeichnet,**
**dass** die Mittel (9) eine Magneteinrichtung zum Erzeugen gepulster Magnetkräfte aufweisen.

5. Vorrichtung nach einem der vorhergehenden Ansprüche,
**dadurch gekennzeichnet,**
**dass** die Mittel (9) unmittelbar an dem Pendel (3) angeordnet sind.

6. Vorrichtung nach einem der vorhergehenden Ansprüche,
**dadurch gekennzeichnet,**
**dass** dem Pendel (3) eine Bremseinrichtung (11) zugeordnet ist.

7. Vorrichtung nach Anspruch 6,
**dadurch gekennzeichnet,**
**dass** das Pendel (3) ausschließlich durch die pulsartige Beschleunigung relativ zu der Bremseinrichtung (11) verstellbar ist.

8. Vorrichtung nach einem der Ansprüche 1 bis 6,
**dadurch gekennzeichnet,**
**dass** die Bremseinrichtung (11) ein aktiv relativ zu dem Pendel (3) zwischen einer Freigabestellung und einer Bremsstellung verstellbares Element (12) aufweist.

9. Vorrichtung nach Anspruch 8,
**dadurch gekennzeichnet,**
**dass** das Element (12) automatisch bei oder vor der Aktivierung der Mittel (9) zum pulsartigen Beschleunigen des Pendels (3) in die Freigabestellung verschwenkbar ist.

10. Vorrichtung nach einem der Ansprüche 8 oder 9,
**dadurch gekennzeichnet,**
**dass** das Element (3) in der Bremsstellung reibschlüssig an dem Pendel (3), vorzugsweise einem Kugelkopf (6) des Pendels (3), anliegt.

## Claims

1. Marking and/or levelling arrangement, comprising a light source (4) which is arranged on a pendulum (3) that can pivot in relation to a housing (2),
**characterized**
**in that** means (9) for pulse-like acceleration of the pendulum (3) and/or of a pendulum mount (8) are provided.

2. Arrangement according to Claim 1,
**characterized**
**in that** the means (9) have a vibrating device having an eccentric that can be driven by means of an electric motor.

3. Arrangement according to either of the preceding claims,
**characterized**
**in that** the means (9) have an air jet device for generating pulsed airstreams.

4. Arrangement according to one of the preceding claims,
**characterized**
**in that** the means (9) have a magnet device for generating pulsed magnetic forces.

5. Arrangement according to one of the preceding claims,
**characterized**
**in that** the means (9) are arranged directly on the pendulum (3).

6. Arrangement according to one of the preceding claims,
**characterized**
**in that** a braking device (11) is assigned to the pendulum (3).

7. Arrangement according to Claim 6,
**characterized**
**in that** the pendulum (3) can be adjusted in relation to the braking device (11) exclusively by the pulse-like acceleration.

8. Arrangement according to one of Claims 1 to 6,
**characterized**
**in that** the braking device (11) has an element (12) that can be adjusted actively in relation to the pendulum (3) between a releasing position and a braking position.

9. Arrangement according to Claim 8,
**characterized**
**in that** the element (12) can be pivoted automatically into the releasing position during or before the activation of the means (9) for the pulse-like acceleration of the pendulum (3).

10. Arrangement according to either of Claims 8 and 9,
**characterized**
**in that** the element (3) bears frictionally against the pendulum (3), preferably against a spherical head (6) of the pendulum (3), in the braking position.

## Revendications

1. Dispositif de marquage et/ou de contrôle du niveau comprenant une source de lumière (4) qui est montée sur un balancier (3) pouvant se balancer par rapport à un boîtier (2),
**caractérisé en ce qu'**il existe des moyens (9) d'accélération impulsionnelle du balancier (3) et/ou d'un palier de balancier (8).

2. Dispositif selon la revendication 1, **caractérisé en ce que** les moyens (9) présentent un dispositif vibreur comprenant un excentrique qui peut être entraîné au moyen d'un moteur électrique.

3. Dispositif selon l'une des revendications précédentes, **caractérisé en ce que** les moyens (9) présentent un dispositif de pulvérisation d'air pour générer des courants d'air pulsés.

4. Dispositif selon l'une des revendications précédentes, **caractérisé en ce que** les moyens (9) présentent un dispositif magnétique pour générer des forces magnétiques pulsées.

5. Dispositif selon l'une des revendications précédentes, **caractérisé en ce que** les moyens (9) sont disposés directement sur le balancier (3).

6. Dispositif selon l'une des revendications précédentes, **caractérisé en ce qu'**un dispositif de freinage (11) est associé au balancier (3).

7. Dispositif selon la revendication 6, **caractérisé en ce que** le balancier (3) peut être positionné par rapport au dispositif de freinage (11) exclusivement par l'accélération impulsionnelle.

8. Dispositif selon l'une des revendications 1 à 6, **caractérisé en ce que** le dispositif de freinage (11) présente un élément (12) qui peut être positionné activement par rapport au balancier (3) entre une position de libération et une position de freinage.

9. Dispositif selon la revendication 8, **caractérisé en ce que** l'élément (12) peut être basculé automatiquement en position de libération lors de ou avant l'activation des moyens (9) en vue de l'accélération impulsionnelle du balancier (3).

10. Dispositif selon l'une des revendications 8 ou 9, **caractérisé en ce que** l'élément (3), en position de freinage, repose par friction contre le balancier (3), de préférence une tête sphérique (6) du balancier (3).
